# EUROPÄISCHE PATENTSCHRIFT

(11) **EP 0 513 583 B1**
(45) Veröffentlichungstag und Bekanntmachung des Hinweises auf die Patenterteilung: **22.02.1995**
(21) Anmeldenummer: 92107096.7
(22) Anmeldetag: 25.04.1992
(51) Int. Cl.: B60R 19/26

(54) **Vorrichtung zum verschiebbaren Halten eines Stossfänger-Seitenteils an einer Fahrzeugkarosserie**
Device for slidable fixing the lateral parts of a bumper to a car body
Dispositif pour fixer de façon coulissante les partis latérales d'un pare-chocs à une carosserie de véhicule

(30) Priorität: 15.05.1991 DE 4115755
(43) Veröffentlichungstag der Anmeldung: 19.11.1992
(73) Patentinhaber: AUDI AG, 85045 Ingolstadt (DE)
(72) Erfinder: Conen, Dieter, W-7107 Neckarsulm (DE); Wätzold, Peter, W-8071 Wettstetten (DE); Kappler, Armin, W-7107 Nordheim (DE)

(56) Entgegenhaltungen:
- EP-A- 0 160 955
- DE-B- 2 728 026

## Beschreibung

Die Erfindung bezieht sich auf eine Vorrichtung zum verschiebbaren Halten eines Stoßfänger-Seitenteils an einer Fahrzeugkarosserie entsprechend dem Oberbegriff des Anspruchs 1.

Mit derartigen, beispielsweise aus der DE-C-2 728 026 bekannten Vorrichtungen wird erreicht, daß die Stoßfänger-Seitenteile bei einer Verschiebung des Stoßfängers aufgrund eines Aufpralls des Fahrzeuges auf ein Hindernis mitverschoben werden können, so daß eine Beschädigung der Karosserie im Bereich der Befestigungsstellen der Seitenteile vermieden ist. Aus ästhetischen Gründen ist es wünschenswert, daß die Oberkanten der Stoßfänger-Seitenteile möglichst bündig an die Karosserie-Außenhaut anschließen, wozu es erforderlich ist, daß die Karosserie im Bereich der Stoßfänger-Seitenteile eingezogen wird. Es ist außerdem wünschenswert, daß der Spalt zwischen der genannten Oberkante des Seitenteils (oder einer auf diese Oberkanten aufgesetzten Zierleiste) und der gegenüberliegenden Kante der Karosserie möglichst klein ist. Hierdurch können sich jedoch Probleme bei der Montage des Stoßfängers am Fahrzeug ergeben, da beim Einschieben des am Seitenteil befestigten Gleitteils in das an der Karosserie befestigte Führungsteil eine Beschädigung des Karosserielacks an der das Seitenteil aufnehmenden Einprägung durch das Seitenteil eintreten kann.

Der Erfindung liegt die Aufgabe zugrunde, eine Vorrichtung der gattungsgemäßen Art zu schaffen, mit der eine Montage des Stoßfängers ohne die Gefahr einer Beschädigung der Karosserie ermöglicht wird.

Diese Aufgabe wird erfindungsgemäß dadurch gelöst, daß das Führungsteil an der Karosserie verschiebbar und durch Schrauben befestigt ist, die sich durch Langlöcher erstrecken, welche in Verschieberichtung schräg nach oben verlaufen.

In der Vormontagestellung ist das Führungsteil in einer Lage, in welcher sich die nur leicht angezogenen Schrauben an den unteren Enden der Langlöcher befinden. Dies hat zur Folge, daß beim Einschieben des Gleitteils in das Führungsteil die Oberkante des Seitenteils an seinem freien Ende in einem Abstand von beispielsweise 5 - 6 mm von der Kante der Karosserie-Eindrückung entfernt ist, welche das Seitenteil aufnimmt. Eine Lackbeschädigung ist somit ausgeschlossen. Nach dem Justieren des Stoßfängers in Fahrzeug- Längs- und Querrichtung sowie in der Höhe beispielsweise durch eine Einrichtung gemäß DE-A-3 928 876 wird das Führungsteil verschoben, wobei es aufgrund der Schräglage der Langlöcher angehoben wird und das Stoßfänger-Seitenteil mit anhebt, bis der gewünschte Minimalabstand zwischen der Oberkante des Seitenteils und der Kante der Karosserie-Einprägung erreicht ist, was vorzugsweise dann der Fall ist, wenn die Befestigungsschrauben des Führungsteils am oberen Ende der Langlöcher anliegen. Dann werden die Schrauben festgezogen. Die dabei eintretende geringfügige Verformung des Seitenteils ist dadurch ermöglicht, daß das Seitenteil in aller Regel aus Kunststoff besteht.

Zur Erleichterung der Montage des Führungsteils kann dieses auf seiner der Karosserie zugewandten Seiten einen hakenförmigen, nach unten zu offenen Ansatz aufweisen, der in eine längliche Aussparung in der Karosserie einhakbar ist, die parallel zu den Langlöchern verläuft. Zur Montage wird der Ansatz in die Aussparung eingehakt, wodurch die Gewindelöcher im Gleitteil, die zur Aufnahme der Befestigungsschrauben dienen, automatisch mit den Langlöchern in der Karosserie fluchten. Dann werden diese Schrauben so weit angezogen, daß sich das Führungsteil beim Einschieben des Gleitteils nicht mit verschiebt.

Um das Verschieben des Führungsteiles zu erleichtern, kann es auf seiner der Karosserie zugewandten Seite einen rohrförmigen Ansatz zur Aufnahme eines Werkzeuges aufweisen, der in einer länglichen Öffnung in der Karosserie geführt ist, die parallel zu den Langlöchern verläuft.

Ein Ausführungsbeispiel der Erfindung wird im folgenden unter Bezugnahme auf die Zeichnungen beschrieben. Es zeigt:
- Fig. 1: eine Draufsicht des Vorderwagens eines Kraftfahrzeuges mit daran befestigtem Stoßfänger,
- Fig. 2: einen Schnitt eines Stoßfänger-Seitenteils und dessen Halterung entlang Linie II-II in Fig. 1, und
- Fig. 3: eine Seitenansicht des Karosserieteiles, an dem das Führungsteil der Halterung für das Stoßfänger-Seitenteil befestigt wird.

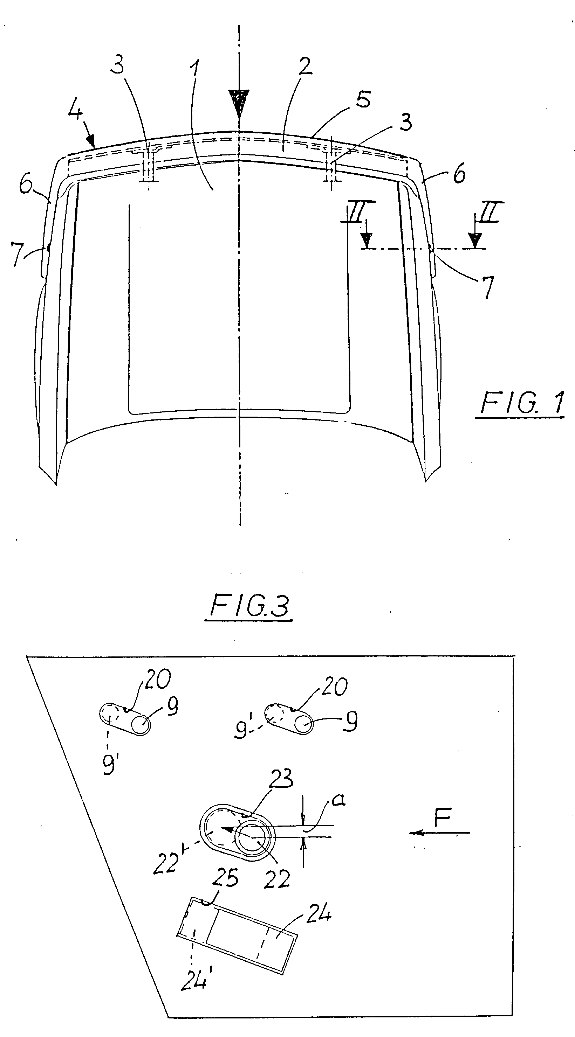

Wie in Fig. 1 gezeigt, ist an der Vorderseite einer Fahrzeugkarosserie 1 ein Stoßfänger 2 über Pralldämpfer 3 befestigt, so daß er sich im Falle eines Aufpralls in Pfeilrichtung auf die Karosserie 1 zu bewegen kann. Der meist aus Stahlblech bestehende Stoßfänger 3 ist mit einem Kunststoff-Überzug 4 versehen, der ein am Stoßfänger 2 befestigtes Mittelteil 5 und daran anschließende Seitenteile 6 aufweist, die über Halterungen 7 an der Karosserie 1 befestigt sind. Diese Halterungen 7 sind so ausgebildet, daß sie bei einer Verschiebung des Stoßfängers 2 in Pfeilrichtung eine entsprechende Verschiebung der Seitenteile 6 relativ zur Fahrzeugkarosserie 1 gestatten.

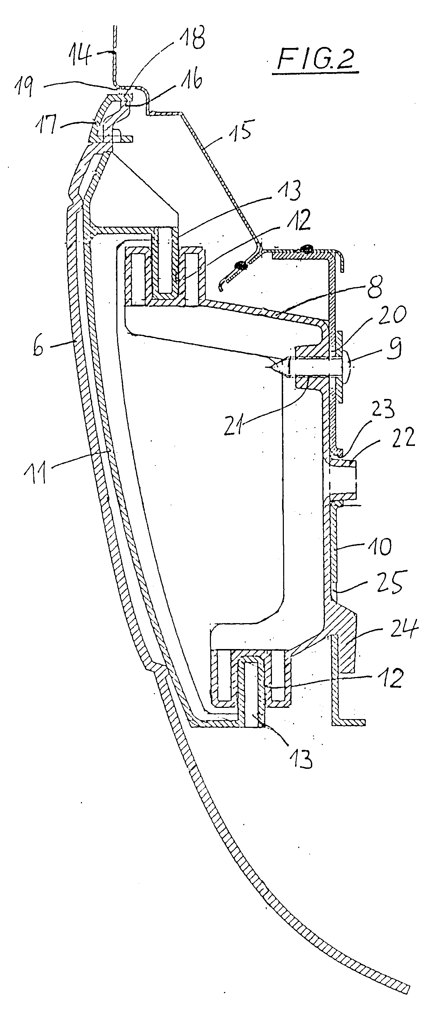

In Fig. 2 ist eine der Halterungen 6 im einzelnen dargestellt. Sie besteht aus einem Führungsteil 8, das durch Schrauben 9 an einem karosseriefesten Teil 10 befestigt ist, und aus einem Gleitteil 11, das an dem Seitenteil 6 des Stoßfängerüberzuges 4 angeschweißt ist. Das Führungsteil 8 ist mit zwei Längsnuten 12 versehen, die sich parallel zur Fahrzeuglängsachse erstrecken. An das Gleitteil 11 sind Stege 13 angeformt, die in den Längsnuten 12 verschiebbar geführt sind. Die Außenhaut 14 der Karosserie ist im Bereich des Seitenteils 6 mit einer Eindrückung 15 versehen, um einen weitgehend bündigen Anschluß des Seitenteils 6 an die Außenhaut 14 zu ermöglichen. An die Oberkante 16 des Seitenteils 6 ist eine Zierleiste 17 aus Metall angeklipst. Die Oberkante 18 der Zierleiste 17 soll aus ästhetischen Gründen in möglichst geringem Abstand von der Kante 19 der Eindrückung 15 liegen, wie dies aus Fig. 2 ersichtlich ist.

Bei der Montage wird der Stoßfänger 2 mit angeklipstem Überzug 4 an den Pralldämpfern 3 befestigt, wobei zunächst die an den Seitenteilen 6 befestigten Gleitteile 11 mit ihren Stegen 13 in die Nuten 12 der Halteteile 8 eingeführt werden und dann die Einheit aus Stoßfänger 2 und Überzug 4 in Richtung des Pfeiles in Fig. 1 so weit verschoben wird, daß die Befestigung des Stoßfängers 2 an den Pralldämpfern 3 mittels der bekannten Justiereinrichtungen befestigt werden kann. Da der Spalt zwischen der Oberkante 19 der Eindrückung 15 sehr eng ist und in der Praxis nur 1 - 2 mm beträgt, kann bei dem vorher beschriebenen Verschieben der aus dem Stoßfänger 2 und dem Überzug 4 bestehenden Einheit ein Verkratzen der Karosserie im Bereich der Kante 19 oder ein Verkratzen der Zierleiste 17 eintreten. Um dies zu vermeiden, ist das Führungsteil 8 nicht, wie üblich, unverrückbar am karosseriefesten Teil 10 befestigt, sondern in Fahrzeuglängsrichtung und gleichzeitig in senkrechter Richtung verschiebbar. Zu diesem Zweck sind die Löcher 20 im karosseriefesten Teil 10, durch welche sich die Schrauben 9 erstrecken, als Langlöcher ausgebildet, die sich in der durch den Pfeil F in Fig. 3 gekennzeichneten Verschieberichtung schräg nach oben erstrecken. Zu Beginn der Montage ist das Führungsteil 8 in einer Stellung, in der sich die Schrauben 9 am unteren Ende der Langlöcher 20 befinden, wie dies in Fig. 3 dargestellt ist. Die Schrauben 9, die sich in Gewindelöcher 21 im Führungsteil 8 erstrecken, sind leicht angezogen, um ein Verschieben des Führungsteils 8 beim Einschieben des Gleitteils 11 zu verhindern. Ist der Stoßfänger 2 mit Überzug 4 montiert, so befindet sich die Oberkante 19 der Zierleiste 17 in einem Abstand von etwa 5 - 6 mm von der Kante 19 der Eindrückung 15. Ein Verkratzen der Karosserie-Außenhaut oder der Zierleiste 17 ist somit ausgeschlossen. Nach Anbringung des Stoßfängers 2 an den Pralldämpfern 3 werden nun die Schrauben, falls erforderlich, so weit gelockert, daß das Führungsteil 8 in Richtung des Pfeiles F verschoben werden kann, womit die Schrauben 9 in die gestrichelt eingezeichnete Stellung 9' gelangen, was zur Folge hat, daß das Seitenteil 6 angehoben wird und der Spalt zwischen der Oberkante 18 der Zierleiste 17 und der Kante 19 der Karosserieaußenhaut 14 auf das gewünschte Maß von 1 - 2 mm verringert wird. Dann werden die Schrauben 9 festgezogen.

Zur Erleichterung dieser Verschiebung des Führungsteils 8 ist das Führungsteil auf seiner dem karosseriefesten Teil 10 zugewandten Seite mit einem rohrförmigen Ansatz 22 versehen, der sich durch eine längliche Öffnung 23 in dem Teil 10 erstreckt, die parallel zu den Langlöchern 20 verläuft. In den Ansatz 22 kann ein Werkzeug eingeführt werden, mit dem die Verschiebung des Führungsteils 8 ausgeführt werden kann.

Zur Erleichterung der Montage des Führungsteils 8 an dem karosseriefesten Teil 10 ist das Führungsteil 8 auf seiner diesem Teil 10 zugewandten Seiten mit einem hakenförmigen Ansatz 24 versehen, der nach unten gerichtet ist und in eine längliche Aussparung 25 in dem karosseriefesten Teil 10 eingehängt werden kann. Nach dem Einhängen fluchten die Gewindelöcher 21 im Führungsteil 8 mit den Langlöchern 20 im Karosserieteil 10. Ein Verkanten des Führungsteils 8 wird dadurch vermieden, daß der hakenförmige Ansatz 24 und die längliche Aussparung 25 einen rechteckigen Querschnitt haben. Die Aussparung 25 verläuft wiederum parallel zu den Langlöchern 20. Beim Verschieben des Gleitteils 8 gelangen der rohrförmige Ansatz 22 und der hakenförmige Ansatz 24 in die in Fig. 3 gestrichelt eingezeichnete Stellung 22' bzw. 24'. Der Weg, um den das Führungsteil 8 und mit ihm das Seitenteil 6 bei der genannten Verschiebung angehoben wird, ist in Fig. 3 mit a bezeichnet.

Die erfindungsgemäße Vorrichtung ist selbstverständlich nicht auf die Halterung der Seitenteile des vorderen Stoßfängers beschränkt, sondern gleichermaßen für die Seitenteile des hinteren Stoßfängers verwendbar. Die Erfindung ist auch nicht auf eine Ausführung beschränkt, bei welcher die Seitenteile 6 mit einem den Stoßfänger 2 abdeckenden Überzug einstöckig sind, sondern in allen Fällen verwendbar, bei denen die Seitenteile mit dem Stoßfänger derart verbunden sind, daß sie mit diesem eine Einheit bilden.

## Patentansprüche

1. Vorrichtung zum verschiebbaren Halten eines Stoßfänger-Seitenteils (6) an einer Fahrzeug-Karosserie (1), mit einem an der Karosserie (1, 10) befestigten Führungsteil (8) und einem mit diesem verschiebbar zusammenwirkenden, am Seitenteil (6) befestigten Gleitteil (11), dadurch gekennzeichnet, daß das Führungsteil (8) an der Karosserie (10) in Fahrzeuglängsrichtung verschiebbar und durch Schrauben (9) befestigt ist, die sich durch Langlöcher (20) in der Karosserie (10), welche in Verschieberichtung (F) schräg nach oben verlaufen, hindurch in Gewindelöcher (21) im Führungsteil (8) erstrecken.

2. Vorrichtung nach Anspruch 1, dadurch gekennzeichnet, daß das Führungteil (8) auf seiner der Karosserie (10) zugewandten Seite einen hakenförmigen, nach unten gerichteten Ansatz (24) aufweist, der in eine längliche Aussparung (25) in der Karosserie (10) einhakbar ist, die parallel zu den Langlöchern (20) verläuft.

3. Vorrichtung nach Anspruch 1 oder 2 , dadurch gekennzeichnet, daß das Führungsteil (8) auf seiner der Karosserie zugewandten Seite einen rohrförmigen Ansatz (22) aufweist, der in einer länglichen Öffnung (23) in der Karosserie (1) geführt ist, die parallel zu den Langlöchern (20) verläuft.

## Claims

1. A device for displaceably holding a bumper side part (6) on the bodywork (1) of a vehicle, having a guide part (8) fixed to the bodywork (1, 10) and a sliding part (11) fixed to the side part (6) and displaceably cooperating with the guide part, characterised in that the guide part (8) is displaceable on the bodywork (10) in the longitudinal direction of the vehicle and is fixed by screws (9) which extend into tapped holes (21) in the guide part (8) through elongated holes (20) in the bodywork (10), which elongated holes run slanting upwards in the direction of displacement (F).

2. A device according to claim 1, characterised in that the guide part (8) has a downwardly directed, hook-shaped projection (24) on its side facing the bodywork (10), which projection can be hooked into an elongated cut-out (25) in the bodywork (10) which runs parallel to the elongated holes (20).

3. A device according to claim 1 or 2, characterised in that the guide part (8) has a tubular projection (22) on its side facing the bodywork, which tubular projection is guided in an elongated opening (23) in the bodywork (1) which runs parallel to the elongated holes (20).

## Revendications

1. Dispositif pour le maintien avec possibilité de coulissement d'une pièce latérale (6) de pare-chocs sur une carrosserie (1) de véhicule automobile, comportant une pièce de guidage (8) fixée sur la carrosserie (1,10) et une pièce de glissement (11) coopérant, avec possibilité de coulissement, avec ladite pièce de guidage et fixée à la pièce latérale (6), caractérisé en ce que la pièce de guidage (8) est fixée sur la carrosserie (10), avec possibilité de coulissement dans la direction longitudinale du véhicule, au moyen de vis (9) qui s'étendent à travers des trous oblongs (20) aménagés dans la carrosserie (10) et dirigés obliquement vers le haut dans la direction de coulissement (F), et qui pénètrent dans des trous filetés (21) aménagés dans la pièce de guidage (8).

2. Dispositif selon la revendication 1, caractérisé en ce que la pièce de guidage (8) présente, sur sa face dirigée vers la carrosserie (10), une partie saillante (24) en forme de crochet qui est dirigée vers le bas et peut s'accrocher dans un évidement oblong (25) qui est aménagé dans la carrosserie (10) et s'étend parallélement aux trous oblongs (20).

3. Dispositif selon l'une des revendication 1 ou 2, caractérisé en ce que la pièce de guidage (8) présente, sur sa face dirigée vers la carrosserie, une partie saillante de forme tubulaire (22) qui est guidée dans une ouverture oblongue (23) qui est aménagée dans la carrosserie (1) et s'étend parallèlement aux trous oblongs (20).
